Europäisches Patentamt

European Patent Office

Office européen des brevets

(19)

(11) Veröffentlichungsnummer : **0 134 569**
**B1**

(12) **EUROPÄISCHE PATENTSCHRIFT**

(45) Veröffentlichungstag der Patentschrift :
04.05.88

(21) Anmeldenummer : 84110017.5

(22) Anmeldetag : 22.08.84

(51) Int. Cl.⁴ : **B 23 K 1/00**, B 05 B 7/16,
C 23 C 4/12

(54) Verfahren zum Löten und/oder zur Oberflächenbeschichtung von Werkstücken.

(30) Priorität : 05.09.83 DE 3331961

(43) Veröffentlichungstag der Anmeldung :
20.03.85 Patentblatt 85/12

(45) Bekanntmachung des Hinweises auf die Patenterteilung : 04.05.88 Patentblatt 88/18

(84) Benannte Vertragsstaaten :
AT BE CH DE FR GB IT LI LU NL SE

(56) Entgegenhaltungen :
DE-A- 2 905 728
DE-A- 3 015 335
FR-A- 2 317 017
US-A- 3 640 760
US-A- 3 773 259

(73) Patentinhaber : INTERATOM Gesellschaft mit beschränkter Haftung
Friedrich-Ebert-Strasse
D-5060 Bergisch Gladbach 1 (DE)

(72) Erfinder : Cyron, Theodor
Hüttenfeld 1
D-5060 Bergisch-Gladbach 3 (DE)

(74) Vertreter : Mehl, Ernst, Dipl.-Ing. et al
Postfach 22 01 76
D-8000 München 22 (DE)

## Beschreibung

Die vorliegende Erfindung betrifft ein Verfahren zum Löten und/oder zur Oberflächenbeschichtung von Werkstücken nach dem Oberbegriff des ersten Anspruchs. Aus der DE-A1-3 015 335 ist bereits eine Anlage zur Behandlung von Werkstücken mit einem explosiven Gasgemisch z. B. zum thermischen Entgraten bekannt. Die dort beschriebene Behandlung von Werkstücken geht von der Erkenntnis aus, daß bei einem Hitzeschock, dem das gesamte Werkstück ausgesetzt wird, Ecken und Kanten bevorzugt abgetragen werden, da an diesen Stellen bei großer Oberfläche und kleinem Volumen besonders viel Wärme aufgenommen wird. Dieser Effekt wurde beim Entgraten ausgenutzt, wobei der Hitzeschock ein Aufheizen der vorstehenden Ecken und Kanten und ein anschließendes Oxidieren bzw. Verbrennen bewirkte. Das bekannte Verfahren wurde bisher z. B. zum Entgraten von relativ massiven Werkstücken eingesetzt, eine Verwendung zum Löten oder zur Oberflächenbeschichtung von Werkstücken wurde nicht in Betracht gezogen.

Da andererseits die bekannten Methoden zum Verlöten oder zur Oberflächenbeschichtung von Werkstücken bisher bei kompliziert geformten Werkstücken mit engen Spalten von geringer Tiefe, z. B. bei geschichteten profilierten Blechen oder Sieben, nicht immer zu zufriedenstellenden Ergebnissen führten, war die Verlötung oder Beschichtung mancher Werkstücke bisher sehr aufwendig.

Zwar ist es bekannt, z. B. aus der DE-A1-2 905 728, daß mittels eines explodierenden Gemisches metallische Überzüge aufgebracht werden können, jedoch wird hierbei die Reaktionsenergie zunächst in thermische und kinetische Energie der Beschichtungsteilchen umgewandelt, wobei die Beschichtungsteilchen dann beim Auftreffen auf das Werkstück den Überzug bilden. Diese Methode eignet sich jedoch naturgemäß nicht für komplizierte Strukturen, da dort nicht alle zu beschichtenden Teile von dem Beschichtungsstrahl getroffen werden können. Zum Verlöten solcher Teile ist ein solches Verfahren überhaupt ungeeignet.

Aufgabe der vorliegenden Erfindung ist daher ein Verfahren zum Löten und/oder zur Oberflächenbeschichtung von Werkstücken, insbesondere von hochtemperaturfesten, dünnwandigen, profilierten Blechen oder Sieben, die zu einer komplizierten Struktur geschichtet oder gewickelt sind.

Zur Lösung dieser Aufgabe wird ein Verfahren nach dem Anspruch 1 vorgeschlagen, welches in einer an sich bekannten, bisher z. B. zum Entgraten verwendeten, Explosionskammer durchgeführt wird. Dazu werden die Werkstücke ganz oder an den zu behandelnden Stellen mit einer pulverförmigen Beschichtung versehen in die Explosionskammer eingebracht. Anschließend wird die Explosionskammer mit einer anderen Reaktionsgasen gefüllt, wobei der Sauerstoffanteil kleiner oder ungefähr gleich dem stöchiometrischen Anteil an den gasförmigen Reaktionspartnern ist. Die Gasmischung, welche je nach den Anforderungen auch unter Überdruck stehen kann, wird gezündet.

Dieses Verfahren ist nicht prinzipiell auf metallische Werkstücke beschränkt, sondern kann zum Beispiel auch zum Beschichten keramischer Teile dienen. Entscheidend für die Funktionsfähigkeit des Verfahrens ist wiederrum die Erkenntnis, daß ein feines Pulver eine große Oberfläche bei relativ kleinem Volumen aufweist, so daß bei der Explosion viel Wärme in das Pulver übertragen wird. Bei der Explosion schmilzt daher das Pulver und verbindet sich mit der aufgeheizten Oberfläche des Werkstücks, so daß eine Beschichtung bzw. eine Verlötung erreicht wird. Wichtig ist allerdings, daß bei dem hier vorgeschlagenen erfindungsgemäßen Verfahren kein erheblicher Sauerstoffüberschuß in den Reaktionsgases vorhanden sein darf, da eine Oxidation der Materialien nicht erwünscht ist, im Gegensatz zum Vorgehen beim Entgraten von Werkstücken. Es kann in Einzelfällen sogar günstig sein, die Anteile der Reaktionspartner so zu wählen, daß das explodierte Gemisch eine reduzierende Atmosphäre bildet. Bei geeigneter Wahl der Verfahrensparameter, wie beispielsweise des Drucks in der Explosionskammer, wird geschmolzenes Pulver auch in enge Spalten hineingedrückt, was bei anderen Beschichtungsverfahren nicht leicht zu erreichen ist, und was beim Löten zu dauerhaften Verbindungen führt.

In spezieller Ausgestaltung der Erfindung wird im Anspruch 2 vorgeschlagen, daß die pulverförmige Beschichtung ein feines Lot-oder Metallpulver ist.

In weiterer Ausgestaltung der Erfindung wird im Anspruch 3 vorgeschlagen, daß die Werkstücke trocken beschichtet bzw. belotet sind, d. h. ohne Verwendung von Klebern, Bindern oder ähnlichem. Überhaupt ist dem Beschichten der Werkstücke mit einem feinen Pulver besondere Beachtung zu schenken, da ein gezieltes Beschichten oder Verlöten nur dann möglich ist, wenn das Pulver in geeigneter Weise aufgebracht und dosiert ist. Im Prinzip eignen sich verschiedene bekannte Verlotungs- bzw. Bestäubungsverfahren, jedoch sollte nach Möglichkeit, wie im Anspruch 3 vorgeschlagen, eine trockene Beschichtung vorgenommen werden. Dabei wird das Werkstück ohne Verwendung von Klebern, Bindern oder ähnlichem mit dem Pulver bestreut bzw. es wird Pulver in die Nähe der zu verlötenden Stellen gebracht, beispielsweise in die dort befindlichen Spalten und/oder Vorsprünge eingedrückt. In engeren Lötspalten bleibt unter Einhaltung bestimmter Bedingungen ausreichend Lotpulver z. B. durch Adhäsionskräfte zurück. Wichtig ist dabei, daß das Lotpulver einen großen Anteil von Lotkörnern aufweist, deren Durchmesser in der Größenordnung der Spalte in unmittelbarer Nähe der zu verlötenden Stellen liegt.

Gemäß Anspruch 4 eignet sich das Verfahren besonders zum Löten oder Beschichten von feinen Metall-Strukturen mit engen Spalten von geringer Tiefe.

In spezieller Ausgestaltung des Verfahrens wird im Anspruch 5 weiterhin vorgeschlagen, daß die zu verlötenden und/oder zu beschichtenden Werkstücke Abgaskatalysator-Trägerkörper sind. Solche feinen Strukturen aus ganz dünnen hochtemperaturfesten Blechen, sind auf andere Weise besonders schwierig zu verlöten und/oder zu beschichten. Die hochtemperaturbeständigen Stahlbleche werden von einem Lot oder z. B. von einem anderen Metall, mit dem die Bleche eventuell beschichtet werden sollen, nur schlecht benetzt. Dies führt bei konventionellen Verfahren zum Herunterlaufen des Lots oder des Beschichtungsmaterials. Dies kann bei dem vorgeschlagenen erfindungsgemäßen Verfahren durch das schlagartige gleichmäßige Erhitzen bei gleichzeitigem Druckanstieg vermieden werden.

Es sei abschließend darauf hingewiesen, daß sich die bekannten Vorrichtungen zum Entgraten nach nur geringen Modifikationen, beispielsweise bezüglich der Konzentration von zugeführtem Sauerstoff, auch für die erfindungsgemäße Verwendung eignen. Die Möglichkeit, die bei der Explosion entstehende Hitze nicht nur z. B. zum Oxidieren von überstehenden Graten zu verwenden, sondern unter Abschluß von Sauerstoff zum Aufschmelzen von Pulver, war bisher nicht erkannt worden. Mit dem erfindungsgemäßen Verfahren eröffnet sich ein neuer Anwendungsbereich.

## Patentansprüche

1. Verfahren zur Behandlung von Werkstücken in einer Explosionskammer, wobei die Werkstücke in die Explosionskammer eingebracht und die Explosionskammer dann mit einer Mischung aus einem brennbaren Gas und Sauerstoff und-/oder anderen Reaktionsgasen gefüllt wird, wonach das Gemisch gezündet wird, gekennzeichnet durch folgende Merkmale :

a) Die zu behandelnden Werkstücke werden vor dem Einbringen in die Explosionskammer ganz oder an den zu behandelnden Stellen mit einer pulverförmigen Beschichtung versehen.

b) Der Sauerstoffanteil an den gasförmigen Reaktionspartnern in der Explosionskammer ist kleiner oder ungefähr gleich dem stöchiometrischen Anteil.

2. Verfahren nach Anspruch 1, dadurch gekennzeichnet, daß für die pulverförmige Beschichtung ein feines Lot- oder Metallpulver verwendet wird.

3. Verfahren nach Anspruch 1 oder 2, dadurch gekennzeichnet, daß die Werkstücke trocken beschichtet bzw. belotet sind, d. h. ohne Verwendung von Klebern, Bindern oder ähnlichem.

4. Verfahren nach einem der Ansprüche 1, 2 oder 3 zum Löten oder Beschichten von feinen Metall-Strukturen mit engen Spalten von geringer Tiefe, z. B. beschichteten profilierten Blechen oder Sieben, insbesondere aus einem Hochtemperaturwerkstoff.

5. Verfahren nach Anspruch 1, 2 oder 3 zum Löten oder Beschichten von Abgaskatalysator-Trägerkörpern, insbesondere aus dünnen hochtemperaturfesten Blechen.

## Claims

1. Process for treating workpieces in an explosion chamber, in which the workpieces are introduced into the explosion chamber and the explosion chamber is then filled with a mixture of a combustible gas and oxygen and/or other reaction gases, whereupon the mixture is ignited characterised by the following features :.

a) Before being introduced into the explosion chamber, the workpieces to be treated are provided with a powdery coating all over or at the points for treating.

b) The proportion of oxygen in the gaseous reactants in the explosion chamber is lower than or approximately equal to the stoichiometric proportion.

2. Process according to claim 1, characterised in that a fine brazing or metal powder is used as the powdery coating.

3. Process according to claim 1 or 2, characterised in that the workpieces are provided with a powdery coating or brazing powder by a dry process i.e. without the use of adhesives bonding agents or the like.

4. Process according to one of claims 1, 2 or 3, for brazing or plating fine metal structures with narrow gaps of little depth, e. g. laminated profiled metal sheets or meshes, made in particular of high temperature material.

5. Process according to claims 1, 2 or 3, for brazing or plating exhaust gas catalyst carrier bodies, made in particular of thin, high temperature resistant metal sheets.

## Revendications

1. Procédé de traitement de pièces dans une chambre d'explosion qui consiste à introduire les pièces dans la chambre d'explosion et à remplir ensuite la chambre d'explosion d'un mélange de gaz combustible et d'oxygène et/ou d'autres gaz de réaction puis à allumer le mélange remarquable par les caractéristiques suivantes :

a) Les pièces à traiter sont munies avant l'introduction dans la chambre d'explosion entièrement ou sur les endroits à traiter d'un revêtement sous forme de poudre.

b) La proportion d'oxygène dans les partenaires de réaction gazeux dans la chambre d'explosion est inférieure ou sensiblement égale à la proportion stœchiométrique.

2. Procédé suivant la revendication 1, caractérisé en ce qu'il consiste à utiliser pour le revêtement sous forme de poudre une fine poudre de soudure ou métallique.

3. Procédé suivant la revendication 1 ou 2, caractérisé en ce qu'il consiste à plaquer ou à souder les pièces à sec c'est-à-dire sans utilisation de colle, de liant ou de produits analogues.

4. Procédé suivant l'une des revendications 1, 2 ou 3 de soudage ou de placage de structure métallique fine ayant des interstices étroits de faible profondeur, par exemple de tôle profilée plaquée ou de tamis, notamment en matériau résistant à une température élevée.

5. Procédé suivant la revendication 1, 2 ou 3, de soudage ou de placage de corps supports de catalyseur pour gaz d'échappement, notamment en tôle mince résistant à une température élevée.